# EUROPEAN PATENT APPLICATION

(11) **EP 4 667 395 A1**
(43) Date of publication of application: **24.12.2025**
(21) Application number: 24305972.2
(22) Date of filing: 20.06.2024
(51) Int. Cl.: B65G 54/02

(54) **CARRIER OF A RAIL-BASED TRANSPORT SYSTEM, RAIL-BASED TRANSPORT SYSTEM, CONTROLLER THEREOF, CONTROL METHOD THEREIN AND DATA CARRIER**

(71) Applicant: SCHNEIDER ELECTRIC INDUSTRIES SAS, 92500 Rueil-Malmaison (FR)
(72) Inventor: FISCHER, Christian Josef, 97837 Erlenbach b. Markthidenfeld (DE)
(74) Representative: Manitz Finsterwald Patent- und Rechtsanwaltspartnerschaft mbB

(57) **Abstract**

A carrier (20) of a rail-based transport system (10) has a frame (21) with a first end (21a) seen in rail direction (RD) and a second end (21b) seen in the opposite rail direction (RD), a guiding and holding mechanism (24) attached to the frame (21) to movably guide and hold the carrier (20) along and at the rail (30), a carrier drive mechanism (23) for driving and braking the carrier (20), and a first magnet coupling (22a) attached to the first end (21a) of the carrier (20) for magnetically coupling the carrier (20) to another carrier.

## Description

The invention is a carrier of a rail-based transport system, a controller thereof, a control method therein and a data carrier with computer executable code.

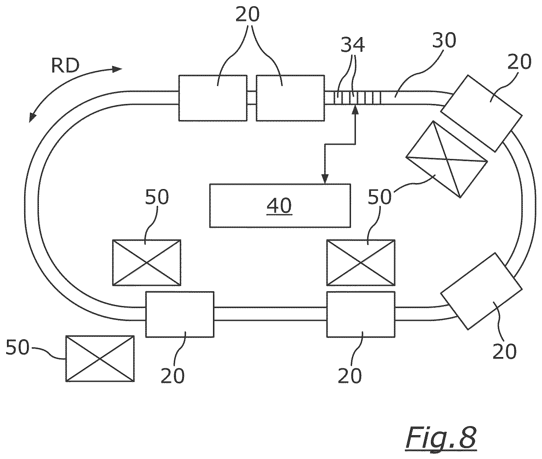

Fig. 8 shows schematically a prior art rail-based transport system. It has a rail 30 which is shown in the depicted embodiment as a closed loop. The rail may or may not form a closed loop. It may also be an open line. It may be straight or curved. It may have yields, turnouts, track switches, crossings and the like. Arrow RD indicates the rail direction, noting that it is the logic direction along the rail in the one or the other direction and which may change depending on curvature of the rail 30.

20 denote plural carriers guided by and held at the rail such that they can move, preferably in both directions. A guiding and holding mechanism may comprise wheels for supporting the weight of the carrier and allowing its displacement. Magnetic forces may also be involved for holding the carrier at the rail.

40 is a control unit for controlling movement of the carriers 20. Each carrier is a priori independently controllable and drivable. However, mechanisms such as collision avoidance amongst carriers may be provided and render some secondary dependency of the control of the a priori independent carriers 20. The control unit 40 can control the carriers 20 concurrently in real time, which may require parallel hardware and/or may require multitasking by time multiplexing or the like.

The drive and braking mechanism for moving a carrier 20 along a rail 30 includes electromagnetism. The carriers 20 may have magnetic structures such as permanent magnets fixedly installed therein. The opposing N and S poles may be distant in rail direction RD.

The rail 30 may comprise an arrangement of plural electromagnets 34, some of them shown in fig. 8 by way of example. The electromagnets 34 are arranged along rail direction RD. Each of them may be individually drivable either on/off or also regarding their amplitude, possibly with PWM. They generate magnetic forces cooperating with the magnetic structure in carrier 20 for generating driving, accelerating or decelerating forces. Thus, carriers 20 can be accelerated, decelerated, held at a certain spot or moved at a certain speed by appropriately controlling the plurality of electromagnets 34 by the control unit 40.

The transport system usually has a not shown tracking mechanism for tracking each carrier 20 regarding its position along the rail in an appropriate coordinate system and desired precision. Precision may be better than (i.e. position error lower than) 20 or 10 or 5% of the carrier extension in rail direction RD. Tracking may be made using position sensors provided along the rail 30 and reporting back to control unit 40, and/or may involve forward computation from an otherwise known position using a known speed and pass time and/or may involve evaluating the electromagnetic feedback from the carrier 20 to the electromagnets 34 and its evaluation in control unit 40.

In this manner, the control 40 has reasonable knowledge about the position of each carrier 20 along rail 30.

The carriers 20 may be used for transporting goods. For example, they may transport goods along an assembly/machining/manufacturing line with individual workstations, some of them symbolized by boxes 50. The carriers 20 may have platforms on which parts or products may be placed and, if needed, also fixedly be mounted. A particular carrier 20 can then pass sequentially the various workstations 50 for individual works being made there. The last station may be an unload station for removing the worked part from the carrier 20. The first station 50 may be a loading station for placing and possibly mounting an intermediate part on the carrier 20.

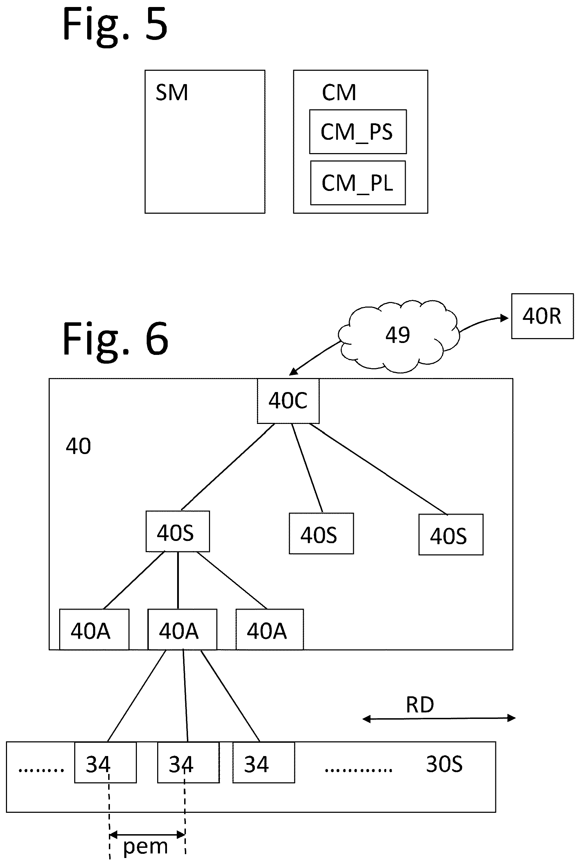

Thus, movement of carriers 20 along the rail 30 may, in closed loops, be circular and may have a preferred direction, such as clockwise in fig. 6. But as already said, carriers may be drivable along rail 30 in both its directions, i.e. left and right or clockwise and counterclockwise.

While the size of the rail and of the carriers is basically arbitrary, typical numbers are for the length of the rail 30 some meters up to more than 10 or 20 meters, and are platform sizes on each carrier 20 of, e.g. roughly rectangular shape with edge length of more than 5 or 10 or 20 centimeters and possibly less than 100 or 50 or 30 centimeter. Movement speeds of the carriers 20 along the rail 30 may be relatively slow, but may also reach values of more than 1 or 2 or 5 meters per second.

Known transport systems have the drawback that the size of, and the drive forces generatable at, the platforms of one of the carriers 20 are limited so that also the size and mass of goods to be transported is limited. It is thus desirable to couple carriers 20 with each other, so that at least along rail direction RD the platform size and the jointly generatable drive force increase.

WO 2019/243630 A1 discloses a multicarrier system. It has transport units and product carriers that may be coupled with the transport units. Said coupling may be made with permanent magnets.

DE 10 2008 040 204 A1 discloses a multicarrier system in which adjacent carriers may interact through magnetic repulsion.

It is the object of the invention to provide a carrier, a rail-based transport system with such carriers, a controller thereof, a control mode therein and a data carrier allowing the versatile and automatically handable coupling and de-coupling of carriers.

This object is accomplished by the features of the independent claims.

A carrier of a rail-based transport system has a frame with a first end seen in rail direction and a second end seen in the opposite rail direction, a guiding and holding mechanism to movably guide and hold the carrier along and at the rail, and a carrier drive mechanism for magnetically driving and braking the carrier. A first magnet coupling is attached to the first end of the carrier for magnetically coupling the carrier to another such carrier. Optionally, a coupling point is provided at the second end and is couplable to a magnet coupling of another such carrier.

Accordingly, a carrier finds the functional counterpart of the first magnetic coupling at the first end in the coupling point of an adjacent carrier at its second point. Thus, the carriers can magnetically be coupled and are then suited to jointly carry items that were too big or too heavy for a single carrier and the forces generatable at it.

The above carrier may have a frame having, in operational posture, an upper frame part lying above the rail and, connected thereto, a lateral frame part lying aside of the rail. The first end and the second end of the frame and the first magnet coupling may be at the lateral frame part. Providing the first magnet coupling at the lateral frame part has the advantage that said lateral frame part can be placed such that at curved rail portions it is at the inner radius of the curve so that gaping of the connected carriers at radial outer portions is possible. The lateral frame part may reach downward from the upper frame part or may, with respect to a curved portion, be the radial innermost portion of the frame, more or less continuous with the upper frame part, so that in curves no gaping occurs.

In a carrier as above, the first magnet coupling may be or have a permanent magnet which has at least one of its poles orientated away, and preferably protruding, from the first carrier end. A permanent magnet does not need power supply for being activated. Making it protrude from the first carrier and in a direction away from the carrier and then in rail direction may be chosen according to necessities. Alternatively, it is also possible to have the first magnetic coupling more or less integrated into the forward surface of the first carrier end.

In a carrier as above, the magnet coupling at one of said frame ends may be designed such that the coupling force developed by it together with its functional counterpart is lower than a decoupling force which can automatically be exerted by the carrier drive mechanism on the carrier. When the magnetic holding force is designed such that it is lower than separating forces that could automatically be exerted on the coupled carriers, these coupled carriers can automatically be decoupled against magnetic coupling forces without requiring human intervention. For such decoupling, the coupled carriers are then individually driven away from each other in opposing directions along the rail so that the magnetic coupling will give way for de-coupling the coupled carriers.

A carrier as above may have as said coupling point a second magnetic coupling at its second end designed as functional counterpart to the first magnet coupling. The second magnetic coupling may itself be a magnet or may be a soft magnetic metal. In a carrier as above, the second magnetic coupling may have a second permanent magnet which has at least one of its poles orientated away, and preferably protruding, from the second carrier end. The away-oriented pole is of opposing polarity to that at the first end. Assuming that in a transport system substantially identical carriers are used, the second magnet coupling may be arranged and placed as if it was the counterpart to the first magnet coupling, although, of course, the two magnetic couplings of the same carrier can never meet. The second magnet coupling would then have the opposing pole protruding from the second end, so that attracting forces would be generated with a magnet from the first magnet coupling.

In a carrier as above, the second magnetic coupling may be or have a ferromagnetic member with a portion orientated away, and preferably protruding, from the second carrier end. The ferromagnetic member may itself be non-magnetic, but may be held by the magnet of the first magnet coupling. The ferromagnetic member may appropriately be shaped and positioned, so that the first magnet coupling from another carrier can access it.

In a carrier as above, the two magnet couplings may have matching contact surface portions. The contact surface portion of the one magnet coupling may be cylindrically or spherically convex and the other may be matchingly concave or may also be convex. During coupling, a contact amongst contact surfaces with predictable coupling forces is desired. It should not depend on whether the track is straight or curved. A convex-convex coupling may accomplish this in good manner. Flat surfaces would be suitable for straight rails. But for curved tracks, curved contact surface portions may be advantageous for allowing some displacement and turning. Opposing surfaces may be matching concave and convex. They may be cylindrical or spherical, particular circular cylindrical and circular spherical.

In a carrier as above, the frame may have a body of macroscopic L shape or U shape with downward pointing legs. The guiding and holding mechanism may have one or more wheels for rolling on a rail structure. The drive mechanism may have magnetic components, preferably at least one permanent magnet whose poles may be spaced apart in the rail direction. The carrier may have a platform suited for carrying and possibly attaching a product.

In an L-shape of the frame body, the one of the two beams of the L may be the upper frame part that is or carries the carrier platform. The other beam of the L may lay sidewards of the rail and may reach downward along the rail. Thus, a gap between the rail and the upper frame portion may extend more or less horizontally, whereas a gap between the rail and the downward reaching frame portion may extend more or less vertically. A U-shape profile of the frame body may be situated upside down in operation posture with the two ends of the U reaching downward on both sides of the rail.

Wheels may role along a rail and may be provided in suitable number and locations. It is pointed out that they may also be provided sideways of the rail at the carrier. The drive mechanism in the rail may be or comprise a sequence of individually drivable electromagnets. Individual such magnets may be provided at a pitch of more than 1 or 2 or 3 centimeters. The pitch may be less than 10 or 5 or 3 centimeters. Driving said electromagnets is made by the control unit of the carrier system. The carrier platform may essentially be flat. It may have mounting structures such as threaded bores for allowing the secure fixation of products to be carried.

A transport system has a carrier as described above, a rail at and along which the carrier is movably held and guided, a rail-mounted drive mechanism co-operating with the carrier drive mechanism and mounted along the rail for driving and braking the carrier, and a control unit for controlling driving of the carrier. The control unit is configured to control driving the carrier in accordance with properties of the magnet coupling. When carriers are coupled magnetically, the holding force of said coupling is limited by the magnetic forces developing between the first and second magnet couplings. Thus, dynamic control of the carriers by the control unit should be such that driving force differences between coupled carriers should not exceed the magnetic holding force of the magnet couplings. This can be achieved in several manners. One of them is driving the two carriers with substantially same force so that no or only a small driving force difference accrues amongst them. But also other possibilities are conceivable.

In the above transport system, the control unit may be configured to assign a first driving control mode or a second driving control mode to the control of each individual carrier. The first driving control mode is a driving control for a carrier in accordance with the properties of the magnet coupling, and the second driving control mode is a driving control for a carrier irrespective of the properties of the magnet coupling. Depending on whether or not a carrier is coupled with another carrier, its driving mode may be selected. Particularly, a driving mode for uncoupled, single driving of a carrier may be modified for driving a coupled carrier. One possibility thereof would, for example, be that a coupled carrier is no longer individually driven, but rather is driven in the same manner as another of the coupled carriers. Likewise, a possibility would be to completely stop driving one of the coupled carriers and drive only another one of the coupled carriers.

The transport system may use a drive mechanism that may constitute, or be similar to, a linear motor. The rail may correspond to the stator and may be electrically active in having plural controllable switchable electromagnets along its length. The carrier may correspond to the displaceable motor carrier and may have permanent magnets as carrier drive mechanism. The control unit controls the electromagnets for generating the desired forces.

The control unit may be configured to simultaneously control driving of two or more carriers at least partially independent of each other and to assign to each of said controlled carriers one of said driving control modes and perform control for said carrier correspondingly. Then, the control unit distinguishes in its driving control between coupled and non-coupled carriers for obtaining an appropriate carrier control.

The control unit may be configured to store and possibly update and possibly check for each controlled carrier its coupling status as to whether it is driving magnetically coupled with another carrier or not. Updating may be made at the end and as a result of respective coupling or decoupling maneuvers. Checking may be made by comparing position and movement of carriers that are adjacent along the track. The control unit may also be configured to assign the first or the second driving control mode to each carrier accordingly and possibly to distinguish in said first driving control mode a pushing carrier driving control mode and a pulling carrier driving control mode. Monitoring and possibly updating the coupling status of a carrier may be made in accordance with the respectively commanded situation and/or in accordance with carrier position tracking information. A part of the control unit activities is, thus, monitoring the coupling status of the carriers. This may be made, for example, in accordance with the commanded activities under the assumption, that reality follows these commands. For example, when coupling has been commanded and has been made, the coupling status may be set to "coupled" and may be reset after a decoupling activity has been commanded. But likewise, coupling status of the carriers may also be monitored with reference, for example, to carrier position and/or speed and/or acceleration tracking made by the general system components in usual manner.

Distinguishing between pushing and pulling carriers may be made for avoiding driving force differences that lead to an unwanted decoupling. While pushing is largely uncritical, an excessive pulling force might lead to unwanted decoupling of coupled carriers. The driving force of a pushing coupled carrier may thus be set higher than the driving force of a pulling driven carrier. It is pointed out that pushing and pulling depends also on dynamic situations. In acceleration, the rear carrier in driving direction is the pushing carrier, whereas in deceleration/braking operations, the forward of coupled carriers is the pushing carrier. The control unit may be configured to make these determinations and store, read, update or use them as required.

The control unit may be configured to perform a force control or an acceleration control in accordance with properties of the magnet coupling (22a, 22b), wherein a further control, particularly a conventional control, may be overlying or underlying said force control or acceleration control.

Thus, generally speaking, the general and conventional carrier control for single driving of each carrier may be modified or supplemented with additional control loops and target values. To the extent that a force control or an acceleration control is desired, it may also be needed to consider the mass of the carriers and possibly of the product carried by them for obtaining a correct calculation of dynamic forces. Such masses may be set for individual carriers as system parameters in an appropriate stage of system customizing. Instead of precise mass values, likewise, appropriate minimum or maximum or average values may be taken.

Generally, as far as a control is addressed in this specification without specific other explicit or implicit indications, it may be a feedback control with some kind of sensor feedback, or it may be a control without feedback.

The control unit may be configured to perform coupling and/or decoupling maneuvers amongst controlled carriers. It may be configured to switch-off and switch-on collision avoidance monitoring at least for coupled carriers or carriers to be coupled. An important part for individual carrier control, i.e. uncoupled carrier control, is collision avoidance amongst carriers. It appears immediately that such conventional control activities must be modified or switched off when a coupling is to be made or maintained. A part of a coupling maneuver for establishing a coupling between two carriers is, thus, disabling conventional collision avoidance. Further, coupling requires the approach of carriers adjacent along the rail. This can be made by adjusting suitable speed differences amongst carriers to be coupled. One carrier may simply rest stationary while the other is slowly approaching until the magnet couplings are coupled. Again switching-on collision avoidance monitoring for decoupled carriers after their decoupling is also possible.

Said switching-on and -off of collision avoidance may also mean, or may be made by, modifying target values, such as minimum distances amongst carriers. It may for uncoupled carrier control be, for example, 10 cm, while for coupled carrier control it is set to 0 cm or a negative value. Switching-on and -off collision avoidance may come together with the above mentioned mode setting.

A decoupling maneuver may involve that opposing forces away from each other are exerted on two coupled carriers by the drive mechanism, commanded by the control unit. The opposing forces are directed away from each other along rail direction and are dimensioned such that finally the magnet couplings give way and the carriers move away from each other. A part of a decoupling maneuver control can then also be reestablishing collision avoidance control. Also coupling status update may be part of the control of coupling maneuvers and decoupling maneuvers. Automatic decoupling as mentioned above is possible when the exertable opposing forces from the drive system are high enough for overcoming the holding forces generated by the magnet couplings. It means vice versa that the magnetic coupling forces are designed such that they can be overcome by the exertable opposing forces from the drive system.

An aspect of the invention is a carrier train in a transport system, comprising two carriers as described, the one of them being coupled with its first magnet coupling 22a to the coupling point of the other of them. A carrier train may in overall or macroscopic system control, such as control of position, speed, acceleration and collision avoidance, be treated in many aspects qualitatively like a single carrier, but considering its modified parameters such as a longer dimension along rail direction, the higher overall mass, the individual controllability of the coupled carriers and so on. More than two carriers may be coupled and/or decoupled for forming a correspondingly longer carrier train.

A transport system may comprise one or more decoupling stations, e.g. as a rail portion as a part of the rail, designed to exert higher forces on carriers at said rail portion than normal rail parts. They may, at least regarding the force surplus, be separately drivable and may, for example, have stronger electromagnets or electromagnets arranged under a smaller pitch. Coupled carriers can then be driven to such stations to be decoupled there by the relatively stronger exertable opposing forces.

A control unit is described that is suited for a transport system as described in this specification. Using a magnet coupling as described above amongst carriers may require also modifications of or supplements for the configurations of the control unit, as described in this specification. Accordingly, a control unit for it alone is also a part reflecting features of the invention.

In a control method in a transport system preferably formed as described in this specification, driving of a carrier is controlled in accordance with properties of a magnet coupling of the carrier, particularly as implemented in the transport system described above or by a control unit as described in this specification. The method described above reflects, irrespective of hardware, what was already described above in conjunction with the hardware of carriers and transport system.

A data carrier has computer-executable code thereon. The code is configured to implement, when executed, the control method described in this specification.

Many features of the invention require configurations of the control unit and overall control structure. Many of these configurations are software implementable and thus require, as their implementation, correspondingly produced code and/or control data, saved on a data carrier. Insofar, also a data carrier with such configured code and/or control data thereon is part of the invention. The data carrier may reside immediately at the control system or may be one of a more or less remote software backup or of a remote software supplier. Software here means at least executable code and/or control and configuration parameters needed by the executable code and/or other digital components for their operation.

In the following, features of the invention will be described with respect to the attached figures, in which
fig. 1 is a schematic perspective view of a transport system,
fig. 2 is a sideview of a carrier on a rail,
fig. 3 shows a magnet coupling,
figs. 4a to d show magnet coupling embodiments,
fig. 5 shows a control structure,
fig. 6 shows a control architecture,
fig. 7 shows a schematic perspective view of two coupled carriers, and
fig. 8 shows prior art.

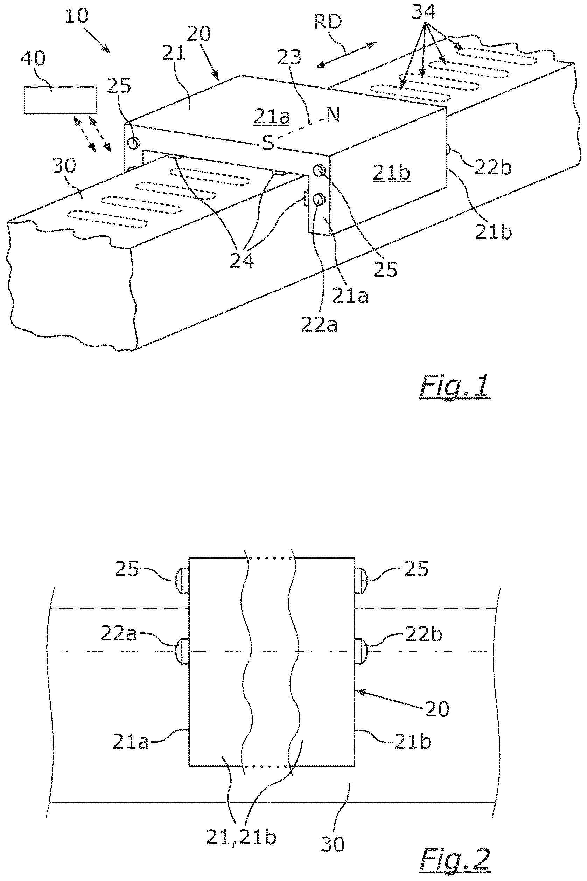

Fig. 1 shows a perspective schematic view of a carrier on a rail portion. The rail 30 is shown as a broken portion that may continue in both directions of the rail direction RD indicated by the arrow RD in fig. 1. 34 are schematically shown electromagnets arranged along the length of the rail for driving the carrier 20. Each of said electromagnets 34 may individually be drivable by a control unit 40. Rail 30 and carrier 20 may constitute or may be seen as elements of a linear motor with, e.g., the rail 30 being the stator and the carrier 20 being the displaceable motor carrier. The rail 30 may generate magnetic travelling waves for driving the carrier 20 in desired manner along the rail 30.

Driving said electromagnets 34 may mean switching on and off the current towards said electromagnet. It may also be a gradual control between on and off and may be pulse width modulation. Only schematically shown is a guiding and holding mechanism 24. It acts between carrier 20 and rail 30 and may comprise a suitable number of wheels for movably holding and guiding the carrier 20 along a rail 30. As already said, motion may be in both directions of the rail direction, as indicated by the double arrow RE in fig. 1. Corresponding to wheels 24 possibly provided at carrier 20, the rail 30 may have rail sections in or along which the wheels run. Besides mechanical means, the guiding and holding mechanism 24 may also invoke magnetical forces for holding the carrier 20 at the rail 30.

As part of the drive system, a carrier 20 may comprise one or more magnets 23, preferably having their opposing poles N and S arranged distant from each other along rail direction. Fig. 1 shows schematically one such magnet, noting, however, that plural of them may be provided.

In conventional manner, the control limit 40 drives the electromagnets 34 for generating, in corporation with magnet 23 of the carrier 20, forces for accelerating or further moving or decelerating the carrier 20 relative to rail 30. The carrier is shown in fig. 1 with U-profile. But more likely, real embodiments may have a carrier body of L-profile where the upper horizontal portion 21u is or carries a transport platform of the carrier and is attached to a lateral portion 21n. This lateral portion may reach downward at a side of the rail 30 as schematically shown in fig. 1. The upper frame part 21u of one or of both coupled carriers may be or have or carry itself a product or may carry a kind of table structure, possibly with a turn-table structure or a slide-table structure thereon for allowing turns and displacements of a load carried by coupled carriers 20 during transport, particularly when during transport the curve radius of the rail changes.

In rail direction RD, the carrier 20 has a first end 21a and a second end 21b. At the first end, a first magnet coupling 22a is provided. It may sit in the first end surface or may protrude therefrom in rail direction, i.e. in the drawing plane of the example of fig. 1 in downward left direction of the drawing.

Usually, carriers are electrically passive elements so that the magnet coupling 22a is preferably a permanent magnet with one of its poles protruding as shown in fig. 1. But in case that a carrier 20 has enough electric power available, the magnet coupling 21a may also here comprise an electromagnet which may then also be switchable.

At the end surface of the carrier 20, one or more bumpers 25 may be situated, configured and arranged and placed to cooperate with, particularly abut at, corresponding bumpers 25 of another carrier 20. For avoiding mechanical over-definition and possibly allowing a smooth coupling, one or both of magnet coupling 22 and bumpers 25 may be held elastically along rail direction. The one or more bumpers 25 may protrude farther away from the carrier body than the magnet couplings 22 and may be held elastically in rail direction RD to be retractable or re-pushable behind the forward end of the magnet coupling 22. Said bumpers may be or comprise elastic rubber structures, e.g. of convex shape, such as a hemispherical shape.

Fig. 2 is a schematic sideview of a carrier 20 on rail 30. It shows both the magnet couplings 22a, b and the bumper 25 protruding from the respective end surfaces 21a, b. Fig. 2 shows also that a carrier has on the respective other end surface a corresponding magnetic coupling 22b and a corresponding bumper 25. The arrangement is such that the first magnet coupling 22a of one carrier can approach and contact the second magnetic coupling 22b of an adjacent carrier 20.

While figs. 1 and 2 show the magnet couplings 22 provided at lateral carrier portions, this is not always needed. A carrier may have no lateral frame part reaching downward along the side of the rail. When, for example, carriers are designed only for straight rails 30 or rails with large radius of curvature, the first magnet coupling 22a and the coupling point may also sit in the middle of the front and rear end faces of the upper portion 21u of the carrier body and may protrude from there somewhat in rail direction. When the first magnet coupling 22a and the coupling point are provided at a lateral portion of the carrier 20 as shown in fig. 1, it is preferred that this lateral portion is at the inner radius of curved portions of the rail 30 because then, when driving along the curve, the gaping of the coupled carriers 20 can occur at the radial outer carrier portions.

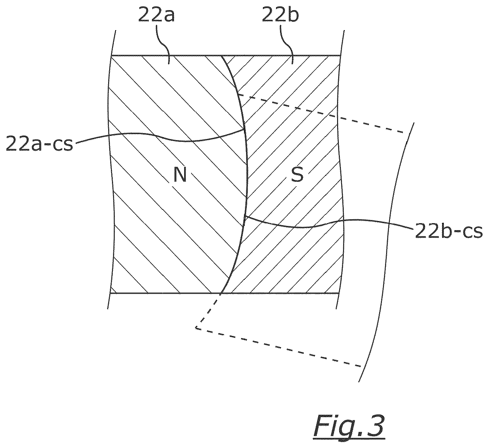

Fig. 3 shows a possible arrangement and geometry of the coupling surfaces of the magnet couplings of adjacent carriers 20. 22a is the first magnet coupling with a coupling surface 22a-cs of a carrier 20, and magnet coupling 22b is the second magnet coupling with a coupling surface 22b-cs of another carrier. They are mounted on these carriers such that when coupling is desired, they find each other and couple with each other through their magnetic forces. They are of opposed magnetic polarity as indicated by N and S in fig. 3.

The surfaces may be matchingly designed. For example, both of them may be flat or slightly convex. But likewise, one of them may be concave the other convex. In straight rail portions, the two magnet couplings 22a and 22b are also in straight alignment. But when it comes to driving along a bent portion of the rail 30, a shift may occur, while still along portions of the matchingly designed coupling surfaces, a close contact and thus a good holding force amongst the magnet couplings exists. But instead of the geometry in fig. 3, the coupling surfaces may also simply be flat or may both be slightly convex.

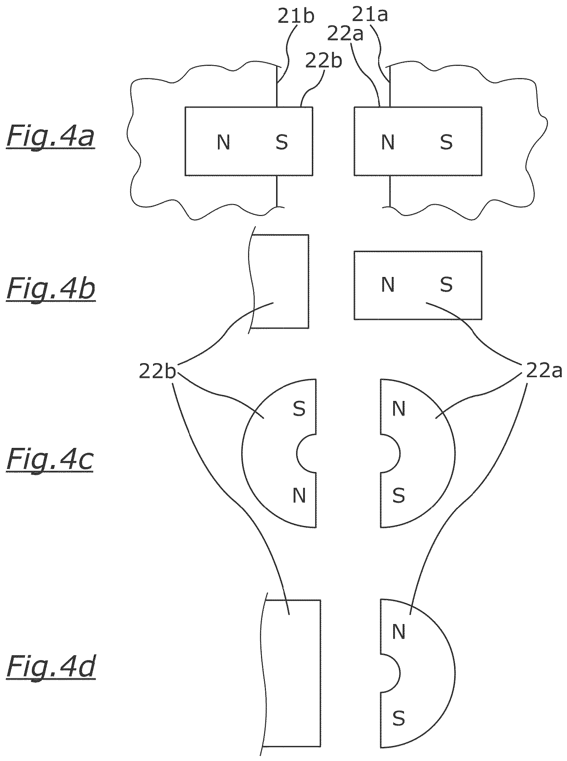

Fig. 4a to 4d show possibilities of arranging first and second magnet couplings 22a, 22b. Only in fig. 4a surrounding portions of the respective carriers are schematically shown. In the other figures these surrounding portions are omitted and only the magnets are shown.

In fig. 4a, the first end 21a of a first carrier has, as a first magnet coupling 22a, a north pole of a permanent magnet slightly protruding from the end surface. An adjacent carrier has its second end portion 21b oriented towards the first end portion 21a of the first mentioned carrier. From the second end portion 21b of said other carrier, another magnet coupling 22b protrudes in a direction away from the carrier. It is also a permanent magnet with the opposing polarity south protruding from the surface, so that north and south poles would find each other.

Fig. 4b shows an embodiment were the first magnet coupling 22a is a permanent magnet whereas the second magnet coupling 22b is a soft-magnetic ferromagnetic part provided at the respective end of the other carrier. This ferromagnetic part may explicitly be provided or may simply be a part of the overall carrier construction or carrier frame, provided it has the required magnetic properties.

Fig. 4c shows horseshoe permanent magnets used as magnet couplings. In this case, one of them has its north pole on the upper side and its south pole on the lower side, whereas for the upper magnets it is the other way round so that again opposing magnet poles find each other.

Fig. 4d shows a horseshoe magnet being used on one of the carriers and a soft-magnetic ferromagnetic part or portion being used at the other carrier.

When magnet couplings are used amongst carriers, the control method for controlling motion of the carriers may be such that control is made in view of properties of said magnetic couplings. Particularly, control may be made such that carriers are allowed to approach each other and that driving forces applied on coupled carriers do not accidently break up the coupling. One may then assume that in a transport system as described, carriers may move single or may move coupled, called "carrier train" above. Accordingly, different control modes may be used depending on the coupling status (single or coupled) of the carriers. The control method may involve tracking the coupling status of the carriers, possibly updating it, and selecting a control mode in accordance with said coupling status.

The control unit 40 of a transport system as described is suited for controlling plural carriers concurrently. Accordingly, the various activities, method steps and methods described for one carrier in this specification may be made concurrently and quasi parallel for plural of them. This may involve multitasking, time-shared use of resources, or possibly parallel resources.

Driving carriers in coupled manner requires what is usually forbidden in single driving, namely that carriers closely approach each other. Usually, a close approach of carriers is avoided by corresponding algorithms for a single carrier driving. But for coupling them, such approaching is necessary, and thus collision avoidance must be switched off or modified amongst the carriers to be coupled, while it must be maintained towards other not coupled carriers. Thus, when two adjacent carriers are to be coupled, a first step could be to switch off collision avoidance amongst said carriers to be coupled to a carrier train or to reduce thresholds for the allowed distance between the two, possibly to 0, and then to approach them by moving the one towards the other at slow speed. At the same time, the coupling status of the two newly coupled carriers may be updated from "single" to "coupled". Coupling success may be monitored, if deemed necessary, through the position and/or speed tracking mechanism available for each of the carriers.

When carriers are controlled for single movement, a single control mode may be employed. Vice versa, when carriers are coupled, a coupled control mode may be employed. Such different modes have different sets of control purposes and parameters and algorithms. Single control mode may be conventional. As already said, in single control mode, collision avoidance is one, whereas it is off or modified in coupled control mode amongst the coupled carriers, but not towards other not coupled carriers. Further, when carriers are coupled, they should be driven such that an accidental breakup of the coupling is avoided. This means that, for example, different forcers away from each other amongst said carriers must not exceed the magnetic holding force of the magnet coupling amongst them. Apart of the coupled control mode may thus be the avoidance of such high differential forces. It may be obtained by driving, for example, the two coupled carriers practically identical with each other, so that they receive practically the same force input so that a differential force between them is correspondingly small. Another approach would be that only one of the carriers is driven, whereas the other is pushed or pulled by the driven carrier. Pushing may then be preferred because it cannot rip apart the coupling. An intermediate approach would then be, for example, to drive the pushing of the two coupled carriers in a certain manner, and to drive the other of the two, i.e. the pushed or pulling carrier, with reduced force.

Also a maximum speed limit and/or a maximum acceleration limit and/or a maximum force limit and/or a maximum current limit may be modified for the dynamic control of a train of coupled carriers. It may be set to lower values than those for uncoupled carriers for avoiding excessive dynamic forces acting on the coupling during acceleration or deceleration.

It is pointed out in this context that the pushing carrier is the one that has driving forces towards the coupled other carrier. In forward acceleration, this may be the rear of the two carriers, seeing in movement direction, while, during braking, it may be the forward of the two coupled carriers. Insofar, in a coupled control mode for a carrier train, it may be desired to distinguish between a push control mode and a pull control mode. Fig. 5 visualizes this. SM is a single driving mode where each carrier is driven in conventional manner for it alone. "CM" is a coupled driving mode where the carriers are driven as explained above. It may distinguish between a pushing coupled mode CM_PS and a pulling coupled mode CM_PL. Either of these modes may be selected for a respective carrier, and control may then be made in accordance with such a mode. Depending on the dynamic development, said selection and assignment may change. The control unit 40 may keep mode records for each of the carriers in which the currently assigned modes for the respective carriers are noted.

Fig. 6 shows the overall control structure in which the above mentioned activities may be implemented. 40 is the control unit. Although called "unit", it may be a logically and physically distributed and hierarchical control system. It may have a central controller 40C for commanding the operational activities of the transport system, i.e. driving, braking, collision avoidance, carrier administration, commanding coupling and decoupling, carrier tracking and the like. The central controller 40 may have an interface towards a remote controller 40R, accessible, for example, through some kind of wiring or network 49. Thus, the central controller 40C may command and monitor the basic activities required by users of the transport system.

Plural segment controllers 40S may be provided and may be in communication connection with the central controller each. The rail 30 itself may be composed of rail segments 30S, one of which being shown at the lower part of fig. 6 schematically. For example, one of the segment controllers 40S may be in charge of controlling one of the rail segments 30S. The activities of the segment controllers 40S are closer to the control of and feedback from the individual electromagnets 34 in that in view of commands from the central controller 40C control parameters for the respective electromagnets of the respective segment may be set, for example. Likewise, the segment controller may receive feedback such as position sensing feedback or a dynamic electromagnetic feedback evaluation feedback, which may be processed and reported towards the central controller 40C, for example for position tracking there and the like.

Each segment controller 40S may be in communication contact with one or a plurality analog controllers 40A which perform the final control activities for each of the electromagnets. It may be switching on and of the respective magnets, which may involve pulse width modulation (PWM) thereof. It may also be evaluating and monitoring current flow, both for monitoring system health and possibly for evaluating electromagnetic feedback for position tracking. Each analog controller 40A may be connected with one or more electromagnets 34 for individually driving and evaluating them. Signals may be communicated through individual lines or through some kind of bus system or may be superimposed on power lines. Power supply may have at least one individually switched supply line between analog controller 40A and each of the electromagnets 34. As said, the pitch amongst electromagnets pem may be in the range of centimeters along rail direction RD. By individually driving the electromagnets 34 through the described control structure, also appropriate maneuvers can be commanded, such as acceleration, deceleration, constant speed driving, steering to a position, coupling, decoupling and the like.

Although the control unit 40 is shown in fig. 6 in a hierarchically distributed embodiment, the implementation may also be different therefrom. Hierarchies may have more or fewer levels.

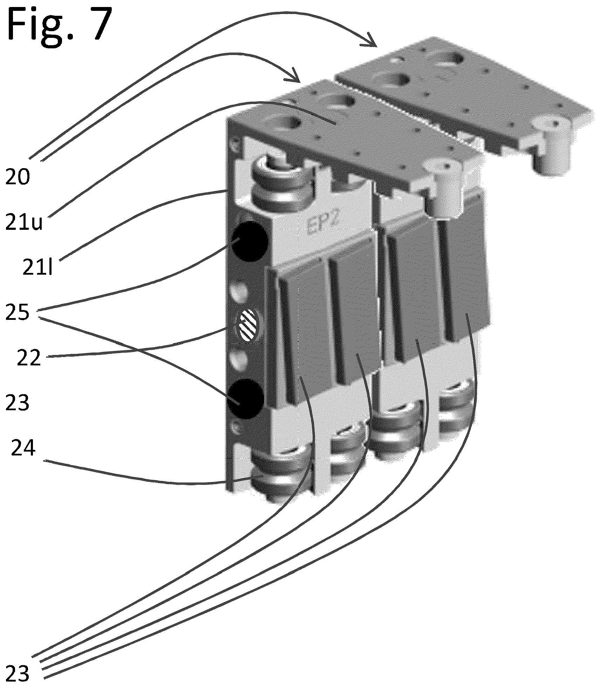

Fig. 7 shows - closer to a real embodiment - a schematic perspective view of a train of two coupled carriers 20 as residing at a rail, the rail not being shown in figure 7. The carrier frames 21 are of macroscopic L profile with the magnet coupling 22 and the bumpers 25 placed at the vertical lateral frame part 21l. The magnet coupling 22 is arranged between two bumpers 25. Wheels of the guiding and holding mechanism 24 are also provided at the vertical lateral frame part 21l. Magnets 23 serve as part of the drive system and also pull with their magnetic forces the carrier 20 sideways towards the rail which has at least corresponding soft-magnetic metal portions. The upper frame part 21u of one or of both said carriers may carry itself a product or may carry a kind of table structure, possibly with a turn-table structure or a slide-table structure thereon for allowing turns and displacements of a load carried by coupled carriers 20 during transport, particularly when the curve radius of the rail changes.

Features described in this specification and/or in the claims and/or shown in a figure shall be deemed combinable with and amongst each other also if their combination is not expressly described, to the extent that the combination is technically feasible. Features described in a certain context, embodiment, figure or claim shall be deemed separable from this claim, context, embodiment or figure and shall be deemed combinable with every other figure, claim, context or embodiment, to the extent that it is technically feasible. Embodiments and figures shall not be understood as being meant necessarily exclusive against each other. Described feature combinations shall be understood optional also when not expressly said so, unless the combination is necessary for technical reasons. Descriptions of a method or a procedure or a method step or a procedural step shall be understood also as a description of means for implementing the method or procedure or method step or procedural step and/or shall possibly also be understood as a description of an artefact made or modified by said method or procedure or method step or procedural step and/or shall possibly also be understood as a description of a data carrier holding program instructions of executable code adapted for implementing the method or procedure or method step or procedural step, and vice versa. In the present specification, references to the "invention" address the teaching as subjectively conceived by the inventors.

### List of reference numerals:

- 10: transport system
- 20: carrier
- 21: frame
- 22: magnet couplings
- 23: magnet
- 24: guiding and holding mechanism
- 25: bumper
- 30: rail
- 34: electromagnet
- 40: control unit
- 49: network
- 50: workstation

## Claims

1. Carrier (20) of a rail-based transport system (10) with:
a frame (21) with a first end (21a) seen in rail direction (RD) and a second end (21b) seen in the opposite rail direction (RD),
a guiding and holding mechanism (24) attached to the frame (21) to movably guide and hold the carrier (20) along and at the rail (30), and
a carrier drive mechanism (23) for magnetically driving and braking the carrier (20),
**characterised by**
a first magnet coupling (22a) attached to the first end (21a) of the carrier (20) for magnetically coupling the carrier (20) to a coupling point of another carrier, and
a coupling point at the second end couplable to a first magnet coupling (22a) of another carrier.

2. Carrier (20) according to claim 1, in which the frame (21) has, in operational posture, an upper frame part (21u) lying above the rail (30) and, connected thereto, a lateral frame part (21l) lying aside of the rail (30), wherein the first end (21a) and the second end (21b) of the frame (21) and the first magnet coupling (22a) are at the lateral frame part (21l).

3. Carrier (20) according to claim 1 or 2, in which the first magnet coupling (22a) has a permanent magnet which has at least one of its poles orientated away, and preferably protruding, from the first carrier end.

4. Carrier (20) according to one of the preceding claims, in which the magnet coupling (22a) at one of said frame ends (21a,b) is designed such that the coupling force developed by it with its functional counterpart is lower than a decoupling force which can automatically be exerted on the coupled carriers (20).

5. Carrier (20) according to one of the preceding claims, having as said coupling point a second magnetic coupling (22b) at its second end (21b) designed as functional counterpart to the first magnet coupling (22a),
wherein the second magnetic coupling (22b) may have a permanent magnet which has at least one of its poles orientated away, and preferably protruding, from the second carrier end (21b),
or wherein the second magnetic coupling (22b) has a ferromagnetic member with a portion orientated away, and preferably protruding, from the second carrier end,
and/or in which the two magnet couplings (22) have matching contact surface portions (22a-cs, 22b-cs), wherein the contact surface portion (22a-cs) of the one magnet coupling (22a) may be cylindrically or spherically convex and the other (22b-cs) is matchingly concave or also convex.

6. Carrier (20) according to one of the previous claims, wherein
the frame (21) has a body of macroscopic L shape, and/or
the guiding and holding mechanism (24) has one or more wheels for rolling on a rail (30), and/or
the drive mechanism (23) has magnetic components, preferably at least one permanent magnet whose poles may be spaced apart in the rail direction (RD), and/or
the carrier has a platform and/or turn-table and/or slide-table suited for carrying and possibly attaching a product.

7. A carrier train in a transport system, comprising two carriers according to one of the preceding claims, the one of them being coupled with its first magnet coupling (22a) to the coupling point of the other of them.

8. Transport system (10) with
a carrier (20) according to one of the previous claims,
a rail (30) at and along which the carrier (20) is movably held and guided,
a rail-mounted drive mechanism (34) co-operating with the carrier drive mechanism (23) and mounted along the rail (30) for driving and braking the carrier (20), and
a control unit (40) for controlling driving of the carrier (20), **characterised in that**
the control unit (40) is configured to control driving the carrier (20) in accordance with properties of the magnet coupling (22a, 22b),
wherein the control unit (40) may be configured to assign a first driving control mode or a second driving control mode to the control of a carrier (20), wherein the first driving control mode is a driving control for a carrier (20) in accordance with the properties of the magnet coupling (22a, 22b) and the second driving control mode is a driving control for a carrier (20) irrespective of the properties of the magnet coupling (22a, 22b).

9. Transport system (10) according to claim 8, wherein the control unit (40) is configured to simultaneously control driving of two or more carriers at least partially independent of each other and to assign to each of said controlled carriers one of said driving control modes and perform control for said carrier (20) correspondingly.

10. Transport system (10) according to claims 8 or 9, wherein the control unit (40) is configured to store for each controlled carrier (20) its coupling status as to whether it is driving magnetically coupled with another carrier or not, to assign the first or the second driving control mode to each carrier (20) accordingly and to distinguish in said first driving control mode a pushing carrier driving control mode and a pulling carrier driving control mode.

11. Transport system (10) according to one or more of the claims 8 to 10, wherein the control unit (40) is configured to perform a force control or an acceleration control in accordance with properties of the magnet coupling (22a, 22b), wherein a further control may be overlying or underlying said force control or acceleration control.

12. Transport system (10) according to one or more of the claims 8 to 11, wherein the control unit (40) is configured to perform coupling and/or decoupling maneuvers amongst controlled carriers, and/or is configured to monitor and possibly update the coupling status of a carrier (20).

13. A control unit (40) for a transport system (10) according to one or more of the claims 8 to 12, preferably configured for controlling one or more of
a coupling maneuver,
a decoupling maneuver,
speed and/or acceleration and/or applied force in accordance with a coupling state of a carrier and/or in accordance with being a leading or trailing carrier in coupled carriers.

14. A control method in a transport system (10), wherein driving of a carrier (20) is controlled in accordance with properties of a magnet coupling (22a, 22b) of the carrier (20), particularly as implemented in a transport system (10) according to one or more of the claims 8 to 12 or by a control unit (40) according to claim 13.

15. A data carrier with computer-executable code thereon, wherein the code is configured to implement, when executed, the method of claim 17.
